# EUROPEAN PATENT APPLICATION

(11) **EP 4 761 251 A1**
(43) Date of publication of application: **17.06.2026**
(21) Application number: 24853646.8
(22) Date of filing: 08.08.2024
(51) Int. Cl.: H04N 21/431, H04N 21/4788, H04N 21/2187

(54) **LIVE-STREAMING INTERACTION METHOD AND APPARATUS, AND DEVICE AND MEDIUM**

(30) Priority: 11.08.2023 CN 202311016494
(71) Applicant: Beijing Zitiao Network Technology Co., Ltd., Beijing 100190 (CN); BEIJING YOUZHUJU NETWORK TECHNOLOGY CO. LTD., Beijing 101299 (CN)
(72) Inventor: FANG, Angxiang, Beijing 100028 (CN); DONG, Shihan, Beijing 100028 (CN); WANG, Li, Beijing 100028 (CN); ZHAO, Mengjie, Beijing 100028 (CN); LI, Yijie, Beijing 100028 (CN)
(74) Representative: Isarpatent
(86) International application number: PCT/CN2024/110604
(87) International publication number: WO 2025/036235

(57) **Abstract**

A live-streaming interaction method and apparatus, and a device and a medium. The method comprises: displaying a live-streaming interface of a target live stream; displaying comment information of the live stream in a first area of the live-streaming interface; and in response to determining that the target live stream meets a preset condition, displaying target resource information in a second area of the live-streaming interface. By using the above technical solution, on the basis of displaying comment information of a live stream in one area of a live-streaming interface, when it is determined that the live stream meets a preset condition, target resource information can be displayed in the other area of the live-streaming interface.

## Description

### CROSS-REFERENCE TO RELATED APPLICATION(S)

The present application claims priority to Chinese Patent Application No. 202311016494.8, filed with the China National Intellectual Property Administration on August 11, 2023 and entitled "LIVE-STREAMING INTERACTION METHOD AND APPARATUS, AND DEVICE AND MEDIUM", which is incorporated herein by reference in its entirety.

### FIELD

The present disclosure relates to the field of live streaming technologies, and in particular, to a live streaming interaction method and apparatus, a device, and a medium.

### BACKGROUND

With the continuous development of Internet technologies and multimedia technologies, an increasing number of users participate in interactions and acquire resources through live streaming.

### SUMMARY

The present disclosure provides a live streaming interaction method and apparatus, a device, and a medium.

Embodiments of the present disclosure provide a live streaming interaction method. The method includes:
displaying a live streaming interface of a target live streaming room;
displaying comment information of the live streaming room in a first area of the live streaming interface; and
displaying target resource information in a second area of the live streaming interface in response to determining that the target live streaming room meets a preset condition.

Embodiments of the present disclosure further provide a live streaming interaction apparatus. The apparatus includes:
a live streaming module configured to display a live streaming interface of a target live streaming room;
a first display module configured to display comment information of the live streaming room in a first area of the live streaming interface; and
a second display module configured to display target resource information in a second area of the live streaming interface in response to determining that the target live streaming room meets a preset condition.

Embodiments of the present disclosure further provide an electronic device. The electronic device includes: a processor; and a memory configured to store instructions executable by the processor. The processor is configured to read the executable instructions from the memory, and execute the instructions to implement the live streaming interaction method according to the embodiments of the present disclosure.

Embodiments of the present disclosure further provide a computer-readable storage medium. The storage medium stores a computer program that is configured to perform the live streaming interaction method according to the embodiments of the present disclosure.

### BRIEF DESCRIPTION OF THE DRAWINGS

The above-mentioned and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a live streaming interaction method according to embodiments of the present disclosure;
FIG. 2 is a schematic diagram of a live streaming interface according to embodiments of the present disclosure;
FIG. 3 is a schematic flowchart of another live streaming interaction method according to embodiments of the present disclosure;
FIG. 4 is a schematic diagram of another live streaming interface according to embodiments of the present disclosure;
FIG. 5 is a schematic diagram of still another live streaming interface according to embodiments of the present disclosure;
FIG. 6 is a schematic structural diagram of a live streaming interaction apparatus according to embodiments of the present disclosure; and
FIG. 7 is a schematic structural diagram of an electronic device according to embodiments of the present disclosure.

### DETAILED DESCRIPTION OF EMBODIMENTS

Embodiments of the present disclosure are described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are merely used as examples, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms are provided in the following description.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

In an existing live streaming solution, resource information in a live streaming room is displayed and acquired in a simplistic manner, resulting in a low resource acquisition rate, which cannot meet user requirements and affects user experience.

In order to solve the problem of information display in a live streaming resource recommendation scenario, embodiments of the present disclosure provide a live streaming interaction method. The method is described below with reference to specific embodiments. Compared with the related art, the technical solutions provided in the embodiments of the present disclosure have the following advantages. According to a live streaming interaction solution provided in the embodiments of the present disclosure, a live streaming interface of a target live streaming room is displayed; comment information of the live streaming room is displayed in a first area of the live streaming interface; and target resource information is displayed in a second area of the live streaming interface in response to determining that the target live streaming room meets a preset condition. According to the technical solution described above, on the basis of displaying the comment information of the live streaming room in an area of the live streaming interface, the target resource information can be displayed in another area of the live streaming interface when it is determined that the live streaming room meets the preset condition. The resource information is integrated, so that a user can quickly and intuitively learn of the resource information on the live streaming interface. This expands a display manner of the resource information, thereby helping improve the resource acquisition efficiency and improve the live streaming interaction experience effect.

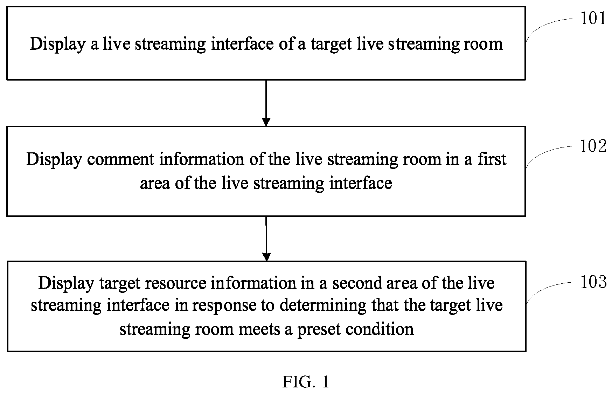

FIG. 1 is a schematic flowchart of a live streaming interaction method according to embodiments of the present disclosure. The method may be performed by a live streaming interaction apparatus, which may be implemented using software and/or hardware and may generally be integrated into an electronic device. As shown in FIG. 1, the method includes the following steps.

Step 101: a live streaming interface of a target live streaming room is displayed.

The live streaming interaction method according to these embodiments of the present disclosure may be performed by a target viewer client (referred to as a viewer client). The viewer client may be a client used by a viewer watching a live stream. The live streaming interface may be an interface in the viewer client for playing a live streaming video of a live streaming room and displaying related information of the live streaming room. In these embodiments of the present disclosure, the live streaming interface may be the live streaming interface of the target live streaming room, and the target live streaming room may be a live streaming room displaying one or more resources and supporting resource acquisition. A live streamer may interact with the viewer in the target live streaming room in the form of Internet live streaming to display resources. There may be one or more resources, which is not specifically limited. In these embodiments of the present disclosure, there may be a plurality of types of resources. For example, the resources may include a virtual resource and a physical resource. The virtual resource may include a virtual item, and the physical resource may include, for example, a physical item. Moreover, the method may alternatively be performed by a target live streamer client, and details are not repeated herein.

In these embodiments of the present disclosure, after receiving a live stream viewing trigger operation of a current object, the viewer client may obtain, from a server, a live streaming video, resource information to be displayed, and other related information of a target live streaming room corresponding to the live stream viewing trigger operation, and display the live streaming video, the resource information, and the other related information of the target live streaming room in a live streaming interface. In these embodiments of the present disclosure, the object may be a viewer or a user watching a live stream.

Step 102: comment information of the live streaming room is displayed in a first area of the live streaming interface.

The first area may be an area set for the comment information of the live streaming room in the live streaming interface. At least part of a live streaming image of a live streaming video is displayed in the first area, and the comment of the live streaming room may partially cover the at least part of the live streaming image. Specifically, the first area may be a bottom area of the live streaming image, such as a public chat area (namely a comment area). The comment information of the live streaming room is displayed in a scrolling manner along a first direction in the first area of the live streaming interface. The first direction may be set based on an actual situation, for example, the first direction may be from bottom to top.

The comment information of the live streaming room is displayed in a layer above the first area of the live streaming interface, that is, the layer in which the comment information of the live streaming room is located is superimposed on a playing layer of the live streaming video, and blocks part of a live streaming image displayed in the first area during the display.

Step 103: target resource information is displayed in a second area of the live streaming interface in response to determining that the target live streaming room meets a preset condition.

The second area is larger than the first area, that is, the second area may be an area that is much larger than the first area in the live streaming interface. For example, the second area may be a central area of the live streaming interface or an area where a line of sight of the object is located, so that the object can intuitively see the second area. At least part of the live streaming image of the live streaming video is further displayed in the second area. The target resource information is displayed in the scrolling manner along a second direction in the second area of the live streaming interface. The second direction is different from the first direction, for example, the second direction may be from left to right.

The second area may be a bullet comment display area. The bullet comment display area may be a top area of the live streaming image, for example, an area outside the public chat area. The bullet comment display area includes at least one bullet comment display track on which the target resource information is displayed. Bullet comment information in the bullet comment display area is also displayed in the scrolling manner along the second direction, and the target resource information may be displayed as a type of bullet comment information. The bullet comment display track may be a track set in the bullet comment display area for displaying the bullet comment information. The bullet comment information may be displayed in the scrolling manner along the bullet comment display track, and at least one bullet comment display track may be set. The resource information is displayed in the bullet comment display area, so that a bullet comment display scenario can be expanded, a display effect of the bullet comment information during live streaming can be improved, and a resource acquisition atmosphere can be effectively strengthened.

In embodiments, target comment information in the comment information of the live streaming room is further displayed in the bullet comment display area. The target comment information may be pinned comment information or comment information that meets a preset interaction condition in the comment information of the live streaming room. A comment that meets the preset interaction condition is, for example, a comment generated in a second preset time period after a like count in a first preset time period in the live streaming room reaches a preset threshold. The first preset time period, the second preset time period, and the preset threshold may be set based on an actual service requirement, which is not specifically limited.

The target resource information may be resource guidance information for guiding the acquisition of a first resource, or may be resource acquisition information. The first resource may be used to transfer at least part of a second resource associated with the live streaming room. For example, the first resource may be a threshold discount coupon, a discount coupon, or a coupon (correspondingly, the resource guidance information for the first resource may be coupon claim guidance information, such as a coupon control/an icon). A part of a second resource of the live streaming room is acquired through the first resource. The second resource may be one of a plurality of resources corresponding to the live streaming room, specifically a physical item or a virtual item promoted in the live streaming room. For example, the second resource may be a book recommended in the live streaming room. The resource acquisition information may be a piece of information indicating that the object has acquired a resource of the target live streaming room. For example, the resource acquisition information may be "Object A has acquired the resource". The preset condition may be a specific condition for determining whether the target resource information is displayed. The preset condition may be related to resource acquisition data, audio data, or video data of the target live streaming room, which may be specifically set based on an actual situation.

In some embodiments, in response to determining that the target live streaming room meets the preset condition includes at least one of the followings: in response to determining that the resource acquisition data of the target live streaming room meets a first condition; or in response to determining that the audio data or the video data of the target live streaming room meets a second condition.

Optionally, determining that the resource acquisition data of the target live streaming room meets the first condition includes: determining that the resource acquisition data of the target live streaming room meets the first condition if a total resource acquisition volume or a resource acquisition volume of a current resource in a preset time period in the target live streaming room reaches a preset threshold.

The preset time period may be preset based on a specific requirement or application scenario. For example, the preset time period may be half an hour. The resource acquisition data may include specific content of each resource corresponding to the target live streaming room that is acquired each time. For example, the resource acquisition data may include a resource acquisition volume, a resource acquisition object, resource acquisition time, a resource acquisition manner, and other data of each resource. The total resource acquisition volume may be a sum of resource acquisition volumes of all resources (e.g., all items promoted in the current live stream) of the target live streaming room in the current live stream. The resource acquisition volume of the current resource (e.g., an item being demonstrated in the target live streaming room at the current moment) may be a resource acquisition volume of the item being demonstrated in the target live streaming room at the current moment in the current live stream. A resource acquisition volume of a resource may be a specific quantity of the resource acquired by the object. The preset threshold may include a first threshold set for the total resource acquisition volume or a second threshold set for the resource acquisition volume of the current resource. The first threshold is greater than the second threshold, which is specifically set based on an actual situation.

The viewer client may obtain the total resource acquisition volume in a preset time period or the resource acquisition volume of the current resource in a preset time period in the target live streaming room, and determine whether the total resource acquisition volume is greater than or equal to the first threshold in the preset threshold, or determine whether the resource acquisition volume of the current resource is greater than or equal to the second threshold in the preset threshold. If it is determined that the total resource acquisition volume is greater than or equal to the first threshold in the preset threshold or the resource acquisition volume of the current resource is greater than or equal to the second threshold in the preset threshold, it is determined that the resource acquisition data of the target live streaming room meets the first condition, that is, it is determined that the target live streaming room meets the preset condition. The viewer client may then replace previously displayed information with the target resource information in the second area of the live streaming interface for display.

In the above-mentioned solution, whether the total resource acquisition volume or the resource acquisition volume of the current resource of the target live streaming room in a period of time reaches the preset threshold is used as a trigger condition for the display of the target resource information, so that accurate triggering may be performed based on an actual resource acquisition situation. This is more in line with an actual application scenario, and helps meet a resource acquisition display requirement in a special scenario.

Optionally, determining that the audio data or the video data of the target live streaming room meets the second condition includes: determining that the audio data or the video data meets the second condition if the audio data of the target live streaming room includes preset audio, or the video data includes a preset image; or
determining that the audio data or the video data meets the second condition if the audio data or the video data includes a preset keyword.

The preset audio may be audio including the preset keyword, and the preset image may be an image including the preset keyword. The preset keyword may be a keyword that is related to the display of the target resource information and that is determined based on a service requirement. A quantity of preset keywords is not limited, for example, the preset keyword may be "countdown", "link is live", etc., which is only an example. The viewer client may obtain the audio data or the video data of the target live streaming room, and determine whether the audio data includes the preset audio or whether the video data includes the preset image, or may perform text conversion on the audio data or the video data to obtain target text, and determine whether the target text includes the preset keyword. If the target text includes the preset keyword, it is determined that the audio data or the video data meets the second condition, that is, it is determined that the target live streaming room meets the preset condition. The viewer client may then replace the previously displayed information with the target resource information in the second area of the live streaming interface for display.

In some embodiments, when the target resource information is the resource acquisition information, the target resource information includes at least one of the following: first information indicating that a target object completes resource acquisition, second information indicating that another object other than the target object completes resource acquisition, or third information indicating that a plurality of objects complete resource acquisition. The first information is displayed in the second area in a first style, the second information is displayed in the second area in a second style, and the third information is displayed in the second area in a third style.

The target object may be an object corresponding to the target viewer client. The first information may represent the acquisition of a resource promoted in the live streaming room by the target object (a user who is watching the live stream through the target viewer client) of the target viewer client. Different resources that are promoted in the live streaming room and that are acquired by the target object may correspond to the same first information, where the first information may be displayed only at the viewer client of the target object. The second information may represent the acquisition of a resource promoted in the live streaming room by another object watching the live stream other than the target object. The first information and the second information may include the same type or different types of information. When the first information and the second information include the same type of information, the first information and the second information may include an object name of the target object and text representing that the resource has been acquired. When the first information and the second information include different types of information, the first information further includes information such as an avatar of the object.

The first style may be a display style set for the first information, the second style may be a display style set for the second information, and the third style may be a display style set for the third information. The first style, the second style, and the third style are different to form a visual difference during the display. The first style, the second style, and the third style may all include attributes such as a border color, a background color, and a text color. It can be understood that the second style may further include a plurality of sub-styles, and attributes, quantities, etc. of different sub-styles are different, to improve visual effects and avoid visual fatigue.

When displaying the target resource information in the second area of the live streaming interface, for the first information of the resource acquisition information in the target resource information, the viewer client may display the first information in the first area in the first style after detecting that the target object has acquired a resource; and for the second information of the resource acquisition information in the target resource information, the viewer client obtains the second information forwarded by the server, and displays the second information in the second area in the second style. The second information may be generated by a client used by the other object. A specific display manner of the first information and the second information described above is the same as a display manner of a bullet comment, that is, the first information and the second information are displayed in the scrolling manner, with no limitation on display locations. For example, the second area is the bullet comment display area, the first information may be displayed in the first row of the bullet comment display area, and the second information may be displayed in another row of the bullet comment display area, which is only an example.

In some embodiments of the present disclosure, in a case where the target resource information includes the first information, displaying the target resource information in the second area of the live streaming interface may include: displaying target prompt information in the live streaming interface; displaying an acquisition entry for the current resource (e.g., an item being demonstrated in the target live streaming room at the current moment) in response to a trigger operation of the target object on the target prompt information; and displaying, in the second area of the live streaming interface in response to detecting that the target object has acquired the current resource through the acquisition entry for the current resource, the target resource information for indicating that the target object has completed the acquisition of the current resource.

The target prompt information may be information for prompting the target object to participate in, through the current resource, an interaction of displaying the target resource information in the second area. The information may be set based on an actual situation. After detecting that the target live streaming room meets the preset condition, the viewer client may further display the target prompt information in the live streaming interface. A specific location of the target prompt information is not limited, for example, the target prompt information may be displayed in the first row of a comment area. Then, the acquisition entry for the current resource may be displayed in response to a trigger operation of the target object on the target prompt information. The acquisition entry may be an acquisition link for the current resource. The current resource may be acquired through the acquisition entry. Then, when it is detected that the target object has acquired the current resource through the acquisition entry for the current resource, the first information of the target object for the current resource may be displayed in the second area of the live streaming interface. For example, if the target object is an object A, and the current resource is a resource No. 1, the first information may be "Object A has acquired the resource".

In the above-mentioned solution, a piece of prompt information enables the object to quickly participate in the interaction of displaying the resource acquisition information in the bullet comment display area, improving the interaction participation efficiency.

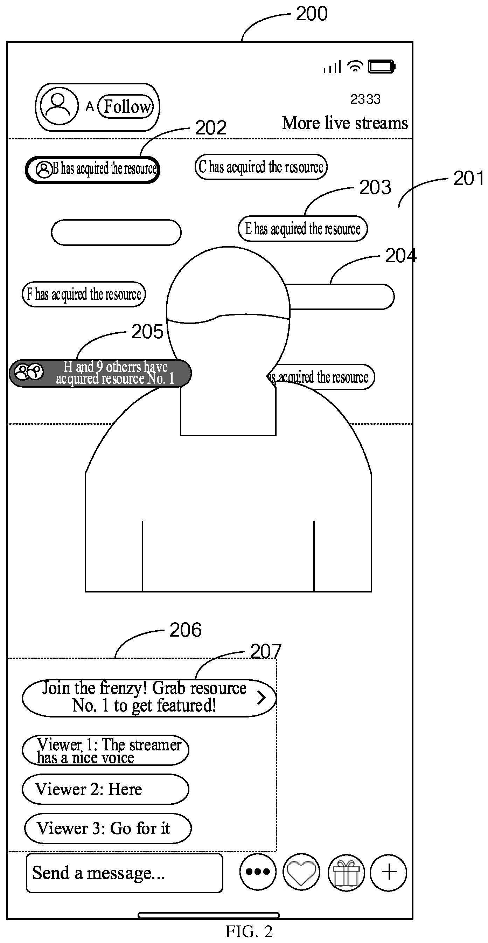

For example, FIG. 2 is a schematic diagram of a live streaming interface according to embodiments of the present disclosure. As shown in FIG. 2, a live streaming interface 200 is displayed in the figure. The target resource information is displayed in a bullet comment display area 201 of the live streaming interface 200. The first information of the target resource information is displayed in the first style in a box 202 in the first row of the bullet comment display area 201. The first information in the figure includes an object name and object avatar of a current object B and text "has acquired the resource". The first style is making the border of the box 202 bold for display, which is only an example. For example, the first style may alternatively be highlighting the border for display. Second information of other objects in two pieces of target resource information are displayed in a box 203 and a box 204 separately in two sub-styles of the second style. The box 203 includes another object E and the text "has acquired the resource". One sub-style of the second style is a black border, black font, and white background. The box 204 includes another object G and the text "has acquired the resource". The other sub-style of the second style is a black border, white font, and gray background. These two sub-styles are only examples.

In addition, as shown in FIG. 2, target prompt information 207 is further displayed in a comment area 206 of the live streaming interface 200 in the figure, and a comment from a viewer who is currently watching the live stream may be displayed in the comment area 206. For example, three comments are shown in the figure. The target prompt information 207 is "Join the frenzy! Grab resource No. 1 to get featured!" for informing that the current object may participate in the interaction of displaying the target resource information in the bullet comment display area through the resource No. 1. After the current object triggers the target prompt information 207, an acquisition entry (not shown in the figure) for the resource No. 1 may be displayed, and then the current object may acquire the resource No. 1 through the acquisition entry. After it is detected that the current object has acquired the resource No. 1, the first information of the target resource information in the box 202 in the bullet comment display area 201 may be displayed. It can be understood that the first information in the box 202 may also be displayed when the current object acquires another resource other than the resource No. 1 through another entry.

In the above-mentioned solution, the first information for the target object and the second information for the other object other than the target object in the target resource information are displayed in different set styles, to form a visual difference, so that the viewer can quickly differentiate between different resource acquisition information, and an information display effect can be improved.

In some embodiments of the present disclosure, when the target resource information includes the third information, displaying the target resource information in the second area of the live streaming interface includes: determining a resource acquisition volume and a target resource whose resource acquisition volume is greater than or equal to two; determining third information corresponding to the target resource; and displaying the third information in the second area of the live streaming interface. The third information is displayed in the second area in the third style.

The resource acquisition object is an object that has acquired the target resource. The resource acquisition object may be a user who acquires a resource. The third information may be resource acquisition information representing that two or more objects in total have acquired a single resource. The plurality of objects corresponding to the third information may include the target object, or may not include the target object, which is not specifically limited. The third information may include information of the resource, information of the object, text representing that the resource has been acquired, etc.

When displaying the target resource information in the second area of the live streaming interface, the viewer client may first obtain a resource acquisition volume of each resource, and determine a target resource whose resource acquisition volume is greater than or equal to two and a quantity of resource acquisition objects is greater than or equal to two. The target resource may be a resource currently being displayed in the live streaming interface, or may be another resource, which is not specifically limited. The third information corresponding to the target resource may then be determined in any manner. For example, the third information preset for the target resource may be obtained, or the third information for the target resource may be generated in real time. The third information for the target resource may then be displayed in the second area of the live streaming interface. Optionally, the third information may be displayed in the third style, where the third style may be different from the first style and the second style.

Optionally, determining the third information corresponding to the target resource may include: determining object information of a plurality of resource acquisition objects corresponding to the target resource, where the resource acquisition object is an object that has acquired the target resource; determining a display title of the target resource based on a resource display sequence or resource name of the target resource; and combining the object information of at least two resource acquisition objects corresponding to the target resource, the display title, and preset text to obtain the third information corresponding to the target resource.

The resource acquisition object may be an object that acquires the target resource, and the object information may include an object avatar and an object name. The resource display sequence of the target resource may be a specific display sequence of the target resource in the target live streaming room, namely a sequential position at which the target resource is displayed in the target live streaming room. The resource name of the target resource may be an original resource name of the target resource, which is set by an owner of the target resource, and may be long. The display title may be a title with a low character count that is set for the target resource. For example, the character count of the display title is not greater than 4. The preset text may be text representing that the resource has been acquired, which is specifically set based on an actual situation. For example, the preset text may be "has acquired the resource".

When determining the third information corresponding to the target resource, the viewer client may obtain the object information of the at least two resource acquisition objects corresponding to the target resource, and the resource display sequence and resource name of the target resource. Then, the display title of the target resource may be determined based on the resource display sequence of the target resource. For example, when the target resource is displayed at the first position, the display title may be the resource No. 1. Alternatively, the display title is determined based on the resource name of the target resource. Specifically, the display title may be determined through a preset algorithm. The resource name of the target resource may be input into the preset algorithm to obtain a corresponding display title, where the preset algorithm may be a pre-sequenced deep learning algorithm. For example, when the resource name of the target resource is "Automatic ** Adjustable Desk Lamp", the display title may be Adjustable Desk Lamp. Then, the object information of the at least two resource acquisition objects corresponding to the target resource, the display title, and the preset text may be combined to obtain the third information corresponding to the target resource, and the third information corresponding to the target resource may be displayed in the second area of the live streaming interface.

For example, with reference to FIG. 2, the third information in the target resource information is displayed in the bullet comment display area 201 of the live streaming interface 200. The third information is displayed in a box 205 in the bullet comment display area 201. The target resource corresponding to the third information in the figure is the resource No. 1. The third information includes object avatars of two objects that acquire the resource No. 1, object names "*B and others", a quantity of objects being 10, and text "have acquired resource No. 1". The third style corresponding to the box 205 is a black border, white font, and black background, which is different from the first style and second style described above.

In the above-mentioned solution, when a plurality of objects acquire the same resource, resource acquisition information of the plurality of objects may be adaptively displayed, so that the viewer can quickly and intuitively learn that a resource is currently being acquired by a plurality of objects. This strengthens a resource acquisition atmosphere, and helps improve the resource acquisition efficiency.

In some embodiments, when the target resource information is resource guidance information, the live streaming interaction method may further include: displaying a resource acquisition control in response to a trigger operation on the target resource information; and acquiring the first resource in response to a trigger operation on the resource acquisition control.

The resource acquisition control may be a function control used to acquire the first resource. The first resource may be used to transfer at least part of the second resource associated with the live streaming room. For example, the first resource may be a threshold discount coupon, a discount coupon, or a coupon. A part of a second resource of the live streaming room is acquired through the first resource. The second resource may be one of a plurality of resources corresponding to the live streaming room. For example, the second resource may be a book recommended in the live streaming room.

The live streaming interaction apparatus may display the resource acquisition control for the target resource information after receiving the trigger operation of the object on the target resource information, and may acquire the first resource after receiving the trigger operation on the resource acquisition control. The resource guidance information is displayed in the live streaming interface, so that the object can quickly acquire the corresponding resource, to transfer or acquire the resource associated with the live streaming room by using the resource. This effectively strengthens the resource acquisition atmosphere, improves an information display effect during live streaming, can meet a resource display requirement in a special scenario, and helps improve the resource acquisition efficiency.

According to a live streaming interaction solution provided in the embodiments of the present disclosure, the live streaming interface of the target live streaming room is displayed; the comment information of the live streaming room is displayed in the first area of the live streaming interface; and the target resource information is displayed in the second area of the live streaming interface in response to determining that the target live streaming room meets the preset condition. According to the technical solution described above, on the basis of displaying the comment information of the live streaming room in an area of the live streaming interface, the target resource information can be displayed in another area of the live streaming interface when it is determined that the live streaming room meets the preset condition. The resource information is integrated, so that the user can quickly and intuitively learn of the resource information on the live streaming interface. This expands a display manner of the resource information, thereby helping improve the resource acquisition efficiency and improve the live streaming interaction experience effect.

In some embodiments, before displaying the target resource information in the second area of the live streaming interface, the live streaming interaction method may further include: determining whether a time interval between a previous trigger time point and a current time point of the target live streaming room is greater than preset time, where the previous trigger time point is a time point when the target resource information is previously displayed in the bullet comment display area of the live streaming interface. Displaying the target resource information in the second area of the live streaming interface includes: performing the display of the target resource information in the second area of the live streaming interface if the time interval between the previous trigger time point and the current time point of the target live streaming room exceeds the preset time.

After detecting that the target live streaming room meets the preset condition, the viewer client may first obtain the time interval between the previous trigger time point and the current time point of the target live streaming room. The previous trigger time point may be a time point when the display of the target resource information in the second area is previously triggered in the target live streaming room, and the time interval is compared with the preset time. If the time interval exceeds the preset time, it indicates that displaying the target resource information in the second area at this time point will not disturb the user, and the operation may be performed. If the time interval does not exceed the preset time, it indicates that there has been an interaction of displaying the target resource information in the second area once in a short period of time, displaying the target resource information at this time point may disturb the user, and the operation of displaying the target resource information in the second area is not performed. The preset time may be set based on an actual situation. For example, the preset time may be set to 1 hour.

In the above-mentioned solution, the comparison between the time interval and the preset time is added before the target resource information is displayed in the bullet comment display area of the live streaming interface, so that the resource acquisition efficiency can be improved while disturbance to the user watching the live stream is effectively avoided. This further improves the user live streaming experience.

In some embodiments, after displaying the target resource information in the second area of the live streaming interface, the live streaming interaction method may further include: ending the display of the target resource information in response to detecting that display duration of the target resource information reaches a display threshold.

The display duration may be duration from the start of the display to the end of the display of the target resource information in the second area. The display threshold may be a time threshold set for the display duration, which may be specifically set based on an actual situation. For example, the display threshold may be set to 10 minutes.

After displaying the target resource information in the second area of the live streaming interface, the viewer client may obtain the display duration of the target resource information in the second area and compare the display duration with the display threshold. If the display duration is equal to the display threshold, the display of the target resource information may be ended, that is, the target resource information may be replaced with the information previously displayed in the second area. The control of the display duration is added, so that an interruption to live streaming caused by the frequent display of the resource information can be avoided. This further improves the user live streaming experience.

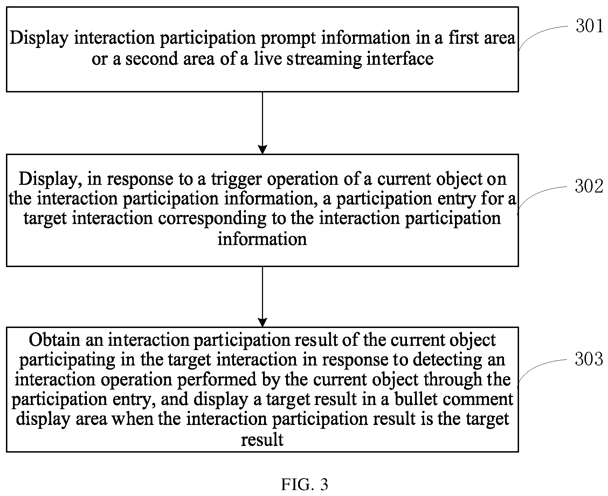

For example, FIG. 3 is a schematic flowchart of another live streaming interaction method according to embodiments of the present disclosure. As shown in FIG. 3, in a feasible implementation, after displaying the target resource information in the second area of the live streaming interface, the live streaming interaction method may further include the following steps.

Step 301: interaction participation prompt information in the first area or the second area of the live streaming interface is obtained.

The interaction participation prompt information may be interaction prompt information used to enhance user participation in a live streaming scenario. There may be at least one type of interaction, which is not specifically limited. For example, the interaction may include obtaining an item and the like. The item may include a physical item and/or a virtual item. The physical item may include a notebook computer and other physical items. The virtual item may include a virtual coupon, a virtual coin, and the like, which is not specifically limited.

After displaying the target resource information in the second area of the live streaming interface, the viewer client may display the interaction participation prompt information in the first area or the second area. Specific information may be set based on an actual situation. Optionally, specific information content of the interaction participation prompt information displayed in the first area and the second area may be the same or different, but has the same function.

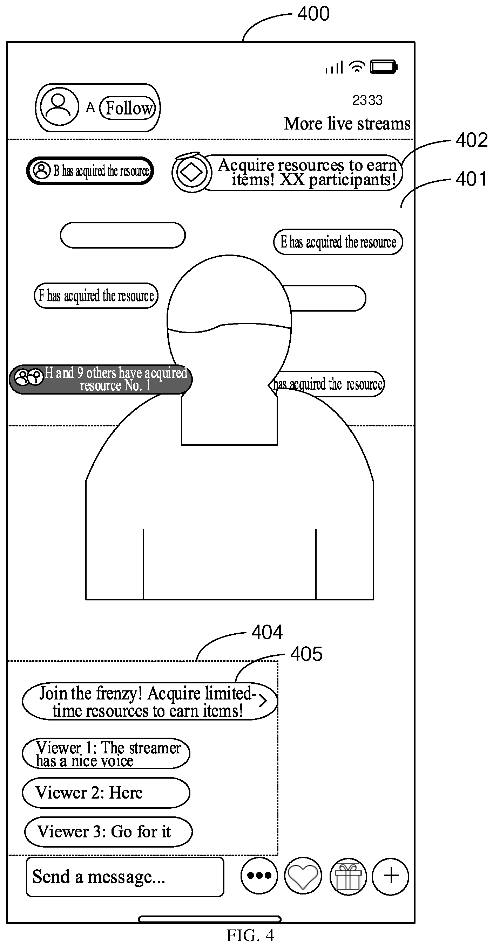

For example, FIG. 4 is a schematic diagram of another live streaming interface according to embodiments of the present disclosure. As shown in FIG. 4, a live streaming interface 400 is displayed in the figure. Interaction participation prompt information 402 is displayed in a bullet comment display area 401 of the live streaming interface 400. The interaction participation prompt information 402 includes information content "Acquire resources to earn items! XX participants!", which is only an example. In addition, interaction participation prompt information 405 may also be displayed in a comment area 404 of the live streaming interface 400. The interaction participation prompt information 405 includes information content "Join the frenzy! Acquire limited-time resources to earn items!", and has the same function as the interaction participation prompt information 402.

Step 302: in response to a trigger operation of a current object on the interaction participation information, a participation entry for a target interaction corresponding to the interaction participation information is displayed.

The trigger operation may include a gesture control operation (such as tapping, long pressing, or double tapping), a voice control operation, an expression control operation, or the like on the interaction participating information. This is not limited in the embodiments of the present disclosure. The participation entry may be a quick entry for participating in the target interaction. The participation entry may include related information of the target interaction, a quick control for participation, and the like. The object may quickly participate in the target interaction through the participation entry.

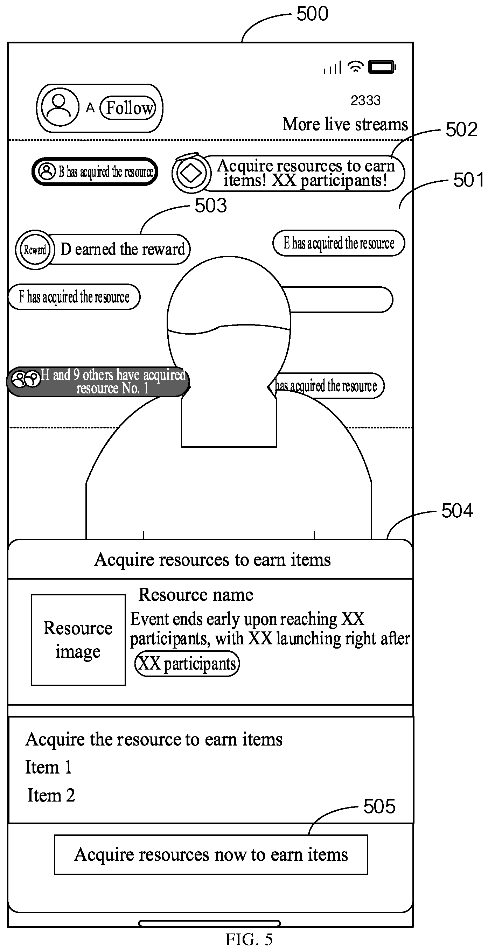

After detecting the trigger operation of the current object on the interaction participation information, the viewer client may display, on the live streaming interface, the participation entry for the target interaction corresponding to the interaction participating information. For example, FIG. 5 is a schematic diagram of still another live streaming interface according to embodiments of the present disclosure. A live streaming interface 500 is displayed in the figure. A participation entry 504 for the target interaction is displayed in the live streaming interface 500. The target interaction is an interaction corresponding to interaction participation prompt information 502 in a bullet comment display area 501. The participation entry 504 is displayed in the form of a card, including related information of the target interaction and a participation control 505. In the figure, the target interaction is "Acquire resources to earn items". A resource image and resource name of a resource corresponding to the target interaction, the end time of the interaction, a quantity of objects currently participating in the interaction, and a specific item of the target interaction are displayed in the participation entry 504.

Step 303: an interaction participation result of the current object participating in the target interaction is obtained in response to detecting an interaction operation performed by the current object through the participation entry, and a target result in the bullet comment display area is displayed when the interaction participation result is the target result.

The interaction operation includes at least one of commenting, liking, and/or resource acquisition. The interaction participation result may be a final result of the current object participating in the target interaction. For example, the target interaction is the acquisition of a physical item, and the interaction participation result may be whether the current object obtains the physical item. The target result may be a positive result in the interaction participation result. For example, the target interaction is the acquisition of a physical item, and the target result is that the physical item has been obtained.

After displaying the participation entry for the target interaction corresponding to the interaction participation information, the viewer client may jump to an interaction control corresponding to the participation entry after detecting the trigger operation of the current object on the participation entry, to obtain the interaction operation performed by the current object through the interaction control. Then, the current object successfully participates in the target interaction, the interaction participation result of the current object participating in the target interaction is obtained, and the target result is displayed in the bullet comment display area of the live streaming interface when the interaction participation result is the target result. When the interaction participation result of the current object is not the target result, the interaction participation result of another object as the target result may alternatively be displayed in the bullet comment display area of the live streaming interface.

For example, with reference to FIG. 5, a target result 503 of the current object participating in the target interaction is displayed in the bullet comment display area 501 of the live streaming interface 500. The current object is D, and the target result is that the current object has obtained the item.

In the above-mentioned solution, in a scenario where the target resource information is displayed in the second area of the live streaming interface, a variety of interactions that enhance the user participation are also supported, and prompt information of the interactions and participation results may also be displayed in the bullet comment display area, so that the user can still quickly participate in the interaction and learn of an interaction result in the current scenario. Through the interaction of displaying the target resource information in the bullet comment display area in combination with other objects, the user participation during live streaming can be further enhanced, which in turn improves a display effect of information during live streaming and the user live streaming experience.

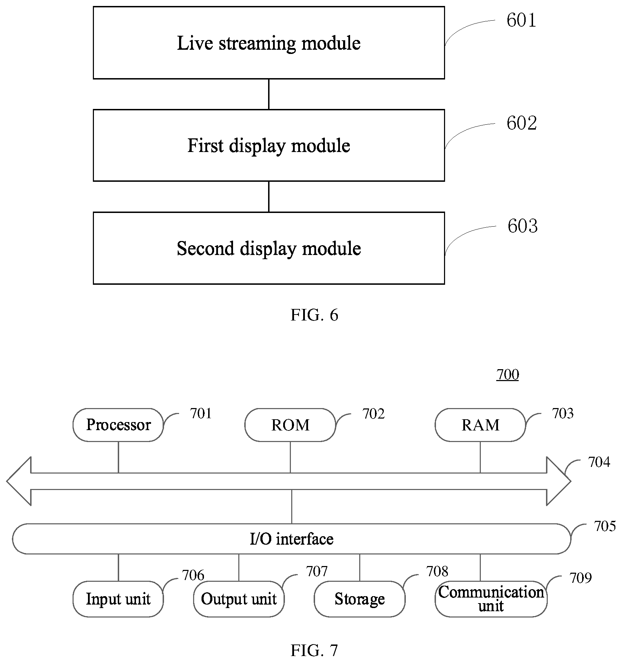

FIG. 6 is a schematic structural diagram of a live streaming interaction apparatus according to embodiments of the present disclosure. The apparatus may be implemented by software and/or hardware, and may generally be integrated into an electronic device. As shown in FIG. 6, the apparatus includes:
a live streaming module 601 configured to display a live streaming interface of a target live streaming room;
a first display module 602 configured to display comment information of the live streaming room in a first area of the live streaming interface; and
a second display module 603 configured to display target resource information in a second area of the live streaming interface in response to determining that the target live streaming room meets a preset condition.

Optionally, the comment information of the live streaming room is displayed in a scrolling manner along a first direction in the first area of the live streaming interface; and the target resource information is displayed in a scrolling manner along a second direction in the second area of the live streaming interface.

Optionally, the target resource information is used to guide the acquisition of a first resource, and the apparatus further includes an acquisition module configured to:
display a resource acquisition control in response to a trigger operation on the target resource information; and
acquire the first resource in response to a trigger operation on the resource acquisition control.

Optionally, the second area is a bullet comment display area, the bullet comment display area includes at least one bullet comment display track, and the target resource information is displayed on the at least one bullet comment display track.

Optionally, the bullet comment display area further displays target comment information in the comment information of the live streaming room.

Optionally, the first resource is used to transfer at least part of a second resource associated with the live streaming room.

Optionally, the second display module 603 includes a determining unit, including at least one of the following:
a first subunit configured to respond to determining that resource acquisition data of the target live streaming room meets a first condition; or
a second subunit configured to respond to determining that audio data or video data of the target live streaming room meets a second condition.

Optionally, the first subunit is configured to:
determine that the resource acquisition data of the target live streaming room meets the first condition if a total resource acquisition volume or a resource acquisition volume of a current resource of the target live streaming room in a preset time period reaches a preset threshold.

Optionally, the second subunit is configured to:
determine that the audio data or the video data meets the second condition if the audio data of the target live streaming room includes preset audio, or the video data includes a preset image.

Optionally, the target resource information includes at least one of the following: first information indicating that a target object completes resource acquisition, second information indicating that another object other than the target object completes resource acquisition, or third information indicating that a plurality of objects complete resource acquisition.

Optionally, the first information is displayed in the second area in a first style, the second information is displayed in the second area in a second style, and the third information is displayed in the second area in a third style.

Optionally, in a case where the target resource information includes the first information, the display module 602 includes a first information unit configured to:
display target prompt information in the live streaming interface;
display an acquisition entry for a current resource in response to a trigger operation of the target object on the target prompt information; and
display, in the second area of the live streaming interface in response to detecting that the target object has acquired the current resource through the acquisition entry for the current resource, the target resource information for indicating that the target object has completed the acquisition of the current resource.

Optionally, the apparatus further includes an interaction module configured to: after displaying the target resource information in the second area of the live streaming interface,
display interaction participation prompt information in the first area or the second area of the live streaming interface;
display, in response to a trigger operation of a current object on the interaction participation information, a participation entry for a target interaction corresponding to the interaction participation information; and
obtain an interaction participation result of the current object participating in the target interaction in response to detecting an interaction operation performed by the current object through the participation entry, and display a target result in the bullet comment display area when the interaction participation result is the target result, where the interaction operation includes at least one of commenting, liking, and/or resource acquisition.

The live streaming interaction apparatus provided in these embodiments of the present disclosure may perform the live streaming interaction method provided in any one of the embodiments of the present disclosure, and has corresponding functional modules for performing the method and corresponding beneficial effects.

Embodiments of the present disclosure further provide a computer program product, including a computer program/instructions that, when executed by a processor, cause the live streaming interaction method according to any one of the embodiments of the present disclosure to be implemented.

FIG. 7 is a schematic structural diagram of an electronic device according to embodiments of the present disclosure. Reference is made specifically to FIG. 7 below, which is a schematic structural diagram of an electronic device 700 suitable for implementing the embodiments of the present disclosure. The electronic device 700 in these embodiments of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in FIG. 7 is merely an example, and shall not impose any limitation on the function and scope of use of the embodiments of the present disclosure.

As shown in FIG. 7, the electronic device 700 may include a processor (for example, a central processing unit or a graphics processing unit) 701 that may perform a variety of appropriate actions and processing in accordance with a program stored in a read-only memory (ROM) 702 or a program loaded from a storage 708 into a random-access memory (RAM) 703. The RAM 703 further stores various programs and data required for the operation of the electronic device 700. The processor 701, the ROM 702, and the RAM 703 are connected to one another through a bus 704. An input/output (I/O) interface 705 is also connected to the bus 704.

Generally, the following means may be connected to the I/O interface 705: an input unit 706 including, for example, a touchscreen, a touchpad, a keyboard, a mouse, a camera, a microphone, an accelerometer, and a gyroscope; an output unit 707 including, for example, a liquid crystal display (LCD), a speaker, and a vibrator; the storage 708 including, for example, a magnetic tape and a hard disk drive; and a communication unit 709. The communication unit 709 may allow the electronic device 700 to perform wireless or wired communication with other devices to exchange data. Although FIG. 7 shows the electronic device 700 having various means, it should be understood that it is not required to implement or have all of the shown means. It may be an alternative to implement or have more or fewer means.

In particular, according to the embodiments of the present disclosure, the process described above with reference to the flowchart may be implemented as a computer software program. For example, embodiments of the present disclosure include a computer program product, which includes a computer program carried on a non-transitory computer-readable medium, where the computer program includes program code for performing the method shown in the flowchart. In such embodiments, the computer program may be downloaded and installed from a network through the communication unit 709, installed from the storage 708, or installed from the ROM 702. When the computer program is executed by the processor 701, the above-mentioned functions defined in the live streaming interaction method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to: display a live streaming interface of a target live streaming room; display comment information of the live streaming room in a first area of the live streaming interface; and display target resource information in a second area of the live streaming interface in response to determining that the target live streaming room meets a preset condition.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a unit does not constitute a limitation on the unit itself under certain circumstances.

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It can be understood that before the use of the technical solutions disclosed in the embodiments of the present disclosure, the user shall be informed of the type, range of use, use scenarios, etc., of information involved in the present disclosure in an appropriate manner in accordance with the relevant laws and regulations, and the authorization of the user shall be obtained.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A live streaming interaction method, comprising:
displaying a live streaming interface of a target live streaming room;
displaying comment information of the live streaming room in a first area of the live streaming interface; and
displaying target resource information in a second area of the live streaming interface in response to determining that the target live streaming room meets a preset condition.

2. The method according to claim 1, wherein the comment information of the live streaming room is displayed in a scrolling manner along a first direction in the first area of the live streaming interface; and the target resource information is displayed in a scrolling manner along a second direction in the second area of the live streaming interface.

3. The method according to claim 1, wherein the target resource information is used to guide acquisition of a first resource, and the method further comprises:
displaying a resource acquisition control in response to a trigger operation on the target resource information; and
acquiring the first resource in response to a trigger operation on the resource acquisition control.

4. The method according to claim 1, wherein the second area is a bullet comment display area, the bullet comment display area comprises at least one bullet comment display track, and the target resource information is displayed on the at least one bullet comment display track.

5. The method according to claim 4, wherein the bullet comment display area further displays target comment information in the comment information of the live streaming room.

6. The method according to claim 3, wherein the first resource is used to transfer at least part of a second resource associated with the live streaming room.

7. The method according to claim 1, wherein in response to determining that the target live streaming room meets the preset condition comprises at least one of:
in response to determining that resource acquisition data of the target live streaming room meets a first condition; or
in response to determining that audio data or video data of the target live streaming room meets a second condition.

8. The method according to claim 7, wherein determining that the resource acquisition data of the target live streaming room meets the first condition comprises:
determining that the resource acquisition data of the target live streaming room meets the first condition in response to a total resource acquisition volume or a resource acquisition volume of a current resource of the target live streaming room in a preset time period reaching a preset threshold.

9. The method according to claim 8, wherein determining that the audio data or the video data of the target live streaming room meets the second condition comprises:
determining that the audio data or the video data meets the second condition in response to the audio data of the target live streaming room comprising preset audio, or the video data comprising a preset image.

10. The method according to claim 1, wherein the target resource information comprises at least one of: first information indicating that a target object completes resource acquisition, second information indicating that another object other than the target object completes resource acquisition, or third information indicating that a plurality of objects complete resource acquisition.

11. The method according to claim 10, wherein the first information is displayed in the second area in a first style, the second information is displayed in the second area in a second style, and the third information is displayed in the second area in a third style.

12. The method according to claim 10, wherein in response to the target resource information comprising the first information, displaying the target resource information in the second area of the live streaming interface comprises:
displaying target prompt information in the live streaming interface;
displaying an acquisition entry for a current resource in response to a trigger operation of the target object on the target prompt information; and
displaying, in the second area of the live streaming interface and in response to detecting that the target object has acquired the current resource through the acquisition entry for the current resource, the target resource information for indicating that the target object has completed the acquisition of the current resource.

13. The method according to claim 1, wherein after displaying the target resource information in the second area of the live streaming interface, the method further comprises:
displaying interaction participation prompt information in the first area or the second area of the live streaming interface;
displaying, in response to a trigger operation of a current object on the interaction participation information, a participation entry for a target interaction corresponding to the interaction participation information; and
obtaining an interaction participation result of the current object participating in the target interaction in response to detecting an interaction operation performed by the current object through the participation entry, and displaying a target result in the bullet comment area in response to the interaction participation result being the target result, wherein the interaction operation comprises at least one of commenting, liking, and/or resource acquisition.

14. A live streaming interaction apparatus, comprising:
a live streaming module configured to display a live streaming interface of a target live streaming room;
a first display module configured to display comment information of the live streaming room in a first area of the live streaming interface; and
a second display module configured to display target resource information in a second area of the live streaming interface in response to determining that the target live streaming room meets a preset condition.

15. An electronic device, comprising:
a processor; and
a memory configured to store instructions executable by the processor,
the processor being configured to read the executable instructions from the memory and execute the instructions to implement the live streaming interaction method according to any of claims 1 to 13.

16. A computer-readable storage medium, the storage medium storing a computer program that is configured to perform the live streaming interaction method according to any of claims 1 to 13.
